Europäisches Patentamt

European Patent Office

Office européen des brevets

(19)

(11) Veröffentlichungsnummer: **0 201 048**
**B1**

(12) # EUROPÄISCHE PATENTSCHRIFT

(45) Veröffentlichungstag der Patentschrift:
31.01.90

(51) Int. Cl.⁴: **A 01 B 49/06, A 01 C 7/06**

(21) Anmeldenummer: 86105983.0

(22) Anmeldetag: 30.04.86

(54) Geschlossene Gerätekombination für die Landwirtschaft.

(30) Priorität: 09.05.85 DE 3516742

(43) Veröffentlichungstag der Anmeldung:
12.11.86 Patentblatt 86/46

(45) Bekanntmachung des Hinweises auf die Patenterteilung:
31.01.90 Patentblatt 90/5

(84) Benannte Vertragsstaaten:
AT BE CH DE FR GB IT LI LU NL SE

(56) Entgegenhaltungen:
EP-A- 0 093 193
DE-A- 3 227 487
DE-B- 1 147 437
FR-A- 2 269 295
FR-A- 2 371 131
FR-A- 2 549 340
GB-A- 1 411 741
GB-A- 2 146 213
US-A- 4 047 638
US-A- 4 148 414

(73) Patentinhaber: Amazonen-Werke H. Dreyer GmbH & Co.
KG, Am Amazonenwerk 9-13, D-4507 Hasbergen-Gaste
(DE)

(72) Erfinder: Dreyer, Heinz, Dipl. Ing. Univ. Dr., Am
Amazonenwerk 7, D-4507 Hasbergen (DE)
Erfinder: Scheufler, Bernd, Dr., Am Amazonenwerk 101,
D-4507 Hasbergen (DE)

(74) Vertreter: Patentanwälte Grünecker, Kinkeldey,
Stockmair & Partner, Maximilianstrasse 58,
D-8000 München 22 (DE)

**Beschreibung**

Die Erfindung betrifft eine Gerätekombination nach dem Oberbegriff des Anspruchs 1.

Eine derartige Gerätekombination ist aus der EP-A-0 093 193 bekannt.

Diese Gerätekombination besteht aus einem zapfwellengetriebenen Zinkenrotor und einer dahinter angeordneten Krümlerwalze sowie einer Drillmaschine, die über einen hydraulischen Hubrahmen mit dem Zinkenrotor gekoppelt ist. Mittels dieses Hubrahmens läßt sich die Drillmaschine zum Transport der Gerätekombination in eine Position oberhalb des Zinkenrotors und der Nachlaufwalze überführen, was eine Reduzierung des erforderlichen Hubkraftbedarfs für den Schlepperkraftheber bewirkt. Dieses ist jedoch nur bei abgeschalteter Zapfwelle möglich.

Da es aber während des Einsatzes der Gerätekombination auf dem Feld bei Wendemanövern notwendig ist, das Gebläse der Drillmaschine zur Erzeugung des Luftstroms für den Gutaustrag durchgehend anzutreiben, damit der Druck für den Saatgutaustrag bzw. bei Einzelkornsägeräten der Unterdruck in den einzelnen Saatgutbehältern erhalten bleibt, kann die Gelenkwelle in diesem Falle nicht abgeschaltet werden. Das bedeutet aber, daß bei laufender Gelenkwelle ein vom Hersteller maximal angegebener Knickwinkel nicht überschritten werden darf, der bei der bekannten Maschine beim Ausheben der Drillmaschine relativ schnell erreicht ist. Jedenfalls kann diese Drillmaschine nicht so weit ausgehoben werden, daß sich eine Schwerpunktverlagerung der Drillmaschine nach vorn und damit eine Reduzierung der vom Schlepper benötigten Hubkraft ergibt.

Aus der DE-OS 3 325 971 ist eine Gerätekombination bekannt, bei der Anschläge vorhanden sind, um während des Einsatzes der Kombination auf dem Feld den Hubbereich des Hubrahmens nach oben zu begrenzen. Die Sämaschine kann aber ebenfalls nur so weit gegenüber der Bodenbearbeitungsmaschine angehoben werden, daß sich keine Schwerpunktverlagerung nach vorne ergibt.

Aus der DE-AS 1 147 437 ist es bekannt, bei einer Staubfördervorrichtung ein Gebläse hinter einem Vorratsbehälter anzuordnen und dieses Gebläse über ein dahinter angeordnetes Vorgelegegetriebe anzutreiben. Der Antrieb des Vorgelegegetriebes erfolgt über eine kurze Gelenkwelle.

Ausgehend von dem eingangs genannten Stand der Technik liegt der Erfindung die Aufgabe zugrunde, die gattungsgemäße Gerätekombination in einfacher Weise so weiterzubilden, daß bei laufender Gelenkwelle die Drillmaschine so weit angehoben werden kann, daß eine deutliche Schwerpunktverschiebung zum Schlepper hin erfolgt.

Gelöst wird diese Aufgabe mit einer Gerätekombination entsprechend den Merkmalen des Anspruchs 1.

Infolge dieser Maßnahmen wird der Hubkraftbedarf zum vollen Ausheben der Gerätekombination mit der Schlepperhydraulik erheblich reduziert, so daß der gesamte Hubbereich des Schlepperkrafthebers ausgenutzt werden kann. Durch die aufgrund der angegebenen konstruktiven Maßnahmen sehr langen Gelenkwelle wird eine über die von den Gelenkwellenherstellern hinausgehende Abwinkelung vermieden, so daß keine Gelenkwellenschäden durch zu große Abwinkelung bei laufender Gelenkwelle entstehen können. Trotzdem kann die Drillmaschine sehr weit ausgehoben werden. Die Gelenkwelle kann auch beim Ausheben der Gerätekombination am Feldende weiterlaufen und das Gebläse antreiben. Ebenfalls braucht das Bodenbearbeitungsgerät nicht abgeschaltet zu werden. Es entstehen beim Wenden am Feldende keine zusätzlichen Rüstzeiten für das Ein- und Ausschalten der Gelenkwelle.

Durch die erfindungsgemäßen Maßnahmen wird der Gelenkwellenanschluß der Drillmaschine extrem weit nach hinten gesetzt mit der Folge, daß man eine relativ lange Gelenkwelle erhält und dadurch sehr vorteilhafte kleine und flache Abwinkelungen beim Ausheben der Drillmaschine gegenüber dem Bodenbearbeitungsgerät.

Die Erfindung geht hier einen vollkommen anderen Weg als dies bekannte Geräte tun, bei denen der Gelenkwellenanschluß in unmittelbarer Höhe der Dreipunktanlenkpunkte angeordnet ist.

Der beschrittene Weg, das Gebläse mit einer Gelenkwelle anzutreiben und durch den weit nach hinten verlagerten Gelenkwellenanschluß sowie durch eine entsprechende Ausgestaltung des Tragrahmens wird der gleiche Vorteil hinsichtlich eines ununterbrochenen Antriebs des Gebläses beim Ausheben der Gerätekombination erreicht, wie wenn das Gebläse von einem Ölmotor, der über Schläuche mit der Schlepperhydraulikanlage verbunden ist, angetrieben würde. Eine solche Lösung wurde im Stand der Technik ebenfalls bereits vorgeschlagen (US-A-4 148 414). Gegenüber dieser Lösung mit dem Ölmotor bietet jedoch die erfindungsgemäße Lösung noch den Vorteil, daß sie einfach, robust, kostengünstig und nicht störanfällig durch Verschmutzung des Öls bzw. Ölerwärmung ist. Im übrigen stehen derzeit praktisch keine Schlepper zur Verfügung, deren Hydraulik es gestattet ein Gebläse anzutreiben.

Vorteilhafte Ausgestaltungen der Erfindung sind in den abhängigen Ansprüchen beschrieben.

Um einen möglichst günstigen, flachen Winkel der Abwinkelung der Gelenkwelle beim Ausheben der Gerätekombination zu erreichen, ist vorgesehen, daß der Abstand zwischen dem Anschlußpunkt der Gelenkwelle an der Drillmaschine und den Dreipunktanschlußpunkten der Drillmaschine an dem Hubrahmen zumindest halb so groß wie der Anstand zwischen dem Anschlußpunkt der Gelenkwelle an dem Bodenbearbeitungsgerät und den Dreipunktanschlußpunkten des Hubrahmens ist.

Damit das Gebläse den freien Schwenkbereich für das Durchschwenken der Gelenkwelle nicht einschränkt, kann das Gebläse seitlich des freien Schwenkbereichs für das Durchschwenken der Gelenkwelle angeordnet sein. Das Gebläse kann im hinteren Bereich unmittelbar vor dem Vorgelege angeordnet sein. Es kann aber auch ein gewisser Abstand zwischen Vorgelegegetriebe und Gebläse vorhanden sein, insbesondere wenn das Gebläse unmittelbar hinter dem Vorratsbehälter für Düngemittel angeordnet ist. Durch die Anordnung des Gebläses hinter dem Vorratsbehälter für Saatgut bzw. für Düngemittel wird darüber hinaus für den Schlepperfahrer eine beträchtliche Geräuschdämpfung erreicht, da der Vorratsbehälter als Schallschluckwand dient.

Bei der Ausführung der Bestellmaschine als Einzelkornsämaschine mit mehreren quer zur Fahrtrichtung nebeneinander angeordneten Sägeräten, die durch eine gemeinsame Antreibswelle angetrieben werden, ist die Antreibswelle in dem Schwenkbereich für die Gelenkwelle geteilt und die Antriebsverbindung für diese beiden geteilten Antreibswellenteile ist um den Schwenkbereich der Gelenkwelle herumgeführt. Ebenfalls ist es möglich, daß die Antreibswelle in dem Schwenkbereich für die Gelenkwelle geteilt ist und daß für jeden Antreibswellenteil ein eigener Antrieb vorgesehen ist.

Da erfindungsgemäß das Gebläse hinter dem Düngerbehälter angeordnet ist, ist es möglich, daß der Düngerbehälter durchgehend ausgebildet und so breit ist, daß der Dünger über die Schwerkraft zu den Scharen gelangt. Hierdurch wird einerseits ein großes Fassungsvermögen des Düngerbehälters geschaffen und andererseits wird eine gequeme Befüllung der Düngerbehälter sowohl vom Boden als auch von der Ladeplattform eines Anhängers aus mittels Säcken erreicht. Des weiteren läßt sich ein durchgehender Düngerbehälter mit einer Förderschnecke wesentlich einfacher als zwei in einem Abstand nebeneinander angeordnete Düngerbehälter befüllen. Somit ist der Vorratsbehälter besonders vorteilhaft von der Seite zu befüllen.

Weitere Einzelheiten und Vorteile der Erfindung sind den übrigen Unteransprüchen und der Beispielsbeschreibung zu entnehmen. Hierbei zeigen:

Fig. 1 die erfindungsgemäße Gerätekombination in Betriebsstellung und in der Seitenansicht,

Fig. 2 die erfindungsgemäße Gerätekombination in der Stellung, die der Stellung beim Wenden am Feldende bzw. der Transportstellung entspricht, ebenfalls in der Seitenansicht,

Fig. 3 die erfindungsgemäße Gerätekombination gemäß Fig. 2 mit eingezeichnetem Schwenkbereich der Gelenkwelle,

Fig. 4 die erfindungsgemäß ausgebildete, mit durchgehendem Saatgut- bzw. Düngemittelbehälter ausgerüstete Enzelkornsämaschine ohne Bodenbearbeitungsgerät in der Vorderansicht,

Fig. 5 eine weitere erfindungsgemäß ausgerüstete Gerätekombination in Betriebsstellung und in der Seitenansicht und

Fig. 6 die erfindungsgemäß ausgebildete Einzelkornsämaschine gemäß Fig. 5 in der Vorderansicht.

Die erfindungsgemäße Gerätekombination besteht aus einem zapfwellengetriebenen und als Kreiselegge 1 ausgebildeten Bodenbearbeitungsgerät, einer mit der Kreiselegge 1 über die Arme 2 verbundenen Bodenwalze 3 und einer zapfwellengetriebenen und als pneumatische Einzelkornsämaschine 4 ausgebildeten Bestellmaschine. Die Einzelkornsämaschine 4 ist über die als Hubrahmen 5 ausgebildeten Kupplungsteile mit der Kreiselegge 1 verbunden. Der Hubrahmen 5 weist die beiden Unterlenker 6 und den Oberlenker 7 auf. Mit Hilfe des Hydraulikzylinders 8, der über die Leitung 9 mit dem Hydraulikkreislauf, an dem auch der Hydraulikzylinder des Dreipunktkrafthebers 10 des Schleppers 11 angeschlossen ist, gekoppelt ist, ist der Hubrahmen 5 in aufrechter Ebene schwenkbar, so daß die Einzelkornsämaschine 4 auszuheben ist.

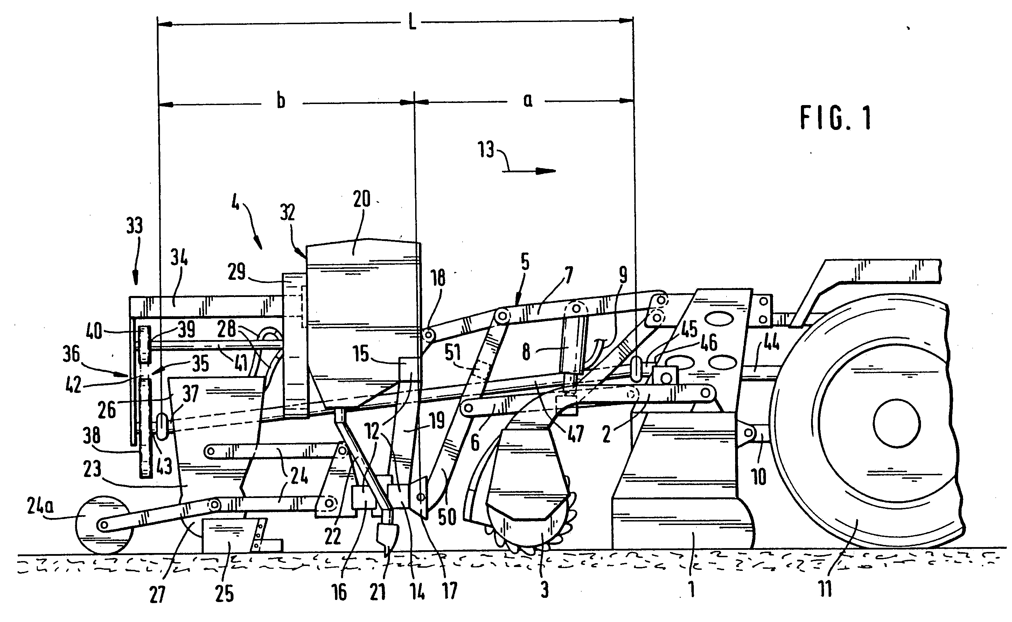

Die Einzelkornsämaschine 4 weist den Tragrahmen 12, der aus den quer zur Fahrtrichtung 13 angeordneten Querträgern 14, 15 und 16 besteht, auf. Bei den Querträgern 14 und 15 handelt es sich um in der Mitte getrennte Querträger, was später noch erläutert wird. An dem Querträger 14 sind die Dreipunktkupplungselemente 17 für den Anschluß der Unterlenker 6 und an dem Querträger 15 das Dreipunktkupplungelement 18 für den Anschluß des Oberlenkers 7 des Hubrahmens 5 angeschweißt. Die senkrecht angeordneten Streben 19 stellen die Verbindung zwischen den Querträgern 14 und 15 dar. Der Querträger 15 erstreckt sich über die gesamte Arbeitsbreite der Einzelkornsämaschine 4. Bei dem Ausführungsbeispiel gemäß den Fig. 1 bis 4 erstreckt sich der am Querträger 15 des Tragrahmens 12 befestigte Vorratsbehälter 20 für Saatgut bzw. Düngemittel ebenfalls über die gesamte Arbeitsbreite der Bestellmaschine 4. Das Saatgut bzw. Düngemittel wird den an den Querträger 14 angeordneten Säscharen 21 über die Saatgutleitungen 22 unter Schwerkrafteinwirkung aus diesem Vorratsbehälter 20 in einstellbaren Mengen zugeführt. Über Befestigungselemente sind die Querträger 14 und 16 miteinander verbunden, wobei die einzelnen Einzelkornsägeräte 23 mit den parallelogrammartigen Halterungen 24 jeweils in aufrechter Ebene bewegbar am Querträger 16 angelenkt sind. Hinter den Einzelkornsägeräten 23 ist jeweils die höheneinstellbare Tiefenführungs- und Druckrolle 24a angeordnet, mit der die Eindringtiefe der Säschare 25 in den Boden bestimmt wird.

Die Einzelkornsägeräte 23 weisen jeweils die Vorratsbehälter 26 auf, von denen aus das sich in den Vorratsbehältern 26 befindliche Saatgut zu den jeweiligen, in den Gehäusen 27 angeordneten Vereinzelungsorganen der Einzelkornsägeräte 23 gelangt. Die Vereinzelung des Saatgutes erfolgt durch Erzeugung eines Unterdruckes in den Gehäusen 27 in bekannter und daher nicht näher erläuteter Weise. Zur Erzeugung des erforderlichen Unterdruckes sind die Gehäuse 27 der Vereinzelungsorgane über Schlauchleitungen 28 mit dem Saugluftgebläse 29 verbunden. Die jeweiligen Vereinzelungsorgane werden von dem Laufrad 30 der Maschine 4 über das Zentralgetriebe 31 angetrieben.

In dem Ausführungsbeispiel gemäß den Fig. 1 bis 4 ist das Saugluftgebläse 29 außermittig direkt hinter dem Vorratsbehälter 20 an der Behälterrückwand 32 angeschraubt. Der Antrieb des Gebläses 29 erfolgt über ein im hinteren Bereich 33 der Bestellmaschine 4 an einem Befestigungsrahmen 34 gelagerten Vorgelegegetriebe 35 von der Schlepperzapfwelle aus, welches später noch näher erläutert wird. Der Befestigungsrahmen 34 wiederum ist am Vorratsbehälter 20 befestigt. Dieses Vorgelegegetriebe 35 ist als Übersetzungsgetriebe 36 ausgebildet und weist an der Getriebeeingangsseite 37 eine große Keilriemenscheibe 38 und auf der Getriebeausgangsseite 39 eine sehr viel kleinere Keilriemenscheibe 40 auf. Die Keilriemenscheibe 40 ist drehfest auf der Gebläseantriebswelle 41 des Gebläses 29 gelagert. Der Keilriemen 42 stellt die Verbindung zwischen den Keilriemenscheiben 38 und 40 dar. Mit Hilfe des Übersetzungsgetriebes 36 wird die zur Erzeugung des Unterdruckes notwendig hohe Drehzahl des Gebläses 29 erreicht. Das Vorgelegegetriebe 35 weist an seiner Getriebeeingangsseite 37 den Anschlußzapfen 43 für eine Gelenkwelle auf.

Die Kreiselegge 1 wird von der Schlepperzapfwelle über die Gelenkwelle 44 angetrieben. An dem Zapfwellendurchtrieb 45 des Kreiseleggengetriebes 46 ist die das Vorgelegegetriebe 35 antreibende Gelenkwelle 47 angeschlossen, die an ihrem anderen Ende mit dem Anschlußzapfen 43 des Vorgelegegetriebes 35 verbunden ist. Da das Vorgelegegetriebe 35 für den Antrieb des Gebläses 29 im hinteren Bereich 33 der Bestellmaschine 4 angeordnet ist, ergibt sich ein großer Abstand L zwischen dem Zapfwellendurchtrieb 45 und dem Anschlußzapfen 43 des Vorgelegegetriebes 35, d.h., der Antrieb des Vorgelegegetriebes 35 erfolgt über eine relativ lange Gelenkwelle 47. Ein Ausheben der Bestellmaschine 4 gegenüber dem Bodenbearbeitungsgerät 1 führt nur zu kleinen und flachen Abwinklungen der langen Gelenkwelle 47, wobei die Bestellmaschine 4 einen ausreichend großen, freien Schwenkbereich 48 für das Durchschwenken der Gelenkwelle 47 aufweist. Dieser freie Schwenkbereich 48 der Bestellmaschine 4 wird durch bauliche Maßnahmen an der Einzelkornsämaschine 4 sowie am Hubrahmen 5 erreicht. Die Querträger 14 und 16 des Tragrahmens 12 sind sowohl bei der Gebläseanordnung direkt hinter dem Saatgut- oder Düngemittelbehälter 20 als auch bei der Gebläseanordnung im hinteren Bereich 33 der Maschine 4 in der Mitte geteilt, so daß sich ein freier Durchgang 49 für die Gelenkwelle 47 ergibt. Die Bauteile der mittleren Einzelkornsägeräte 23 sind derart angeordnet, so daß sie nicht in den Schwenkbereich 48 für das Durchschwenken der Gelenkwelle 47 hineinragen. Bei der Anordnung des Gebläses 29 direkt hinter dem Vorratsbehälter 30 ist das Gebläse 29 gegenüber dem mittig angeordneten Vorgelegegetriebe 35 außermittig versetzt an der Behälterrückwand 32 des Vorratsbehälters 20 befestigt, so daß es ebenfalls nicht in den Schwenkbereich 48 der Gelenkwelle 47 hineinragt. Die die beiden Hubstreben 50 des Hubrahmens 5 verbindende Verstrebung 51 ist so angeschweißt, daß sie den Schwenkbereich 48 der Gelenkwelle 47 ebenfalls nicht einschränkt.

Während des Einsatzes der Gerätekombination nimmt diese die in der Fig. 1 dargestellte Position ein, wobei die Gelenkwellen 44 und 47 praktisch keine bzw. nur sehr geringe Abwinklungen aufweisen, so daß keine Beschädigungen an den laufenden Gelenkwellen 44 und 47 auftreten, d.h. also, daß der Zapfwellendurchtrieb 45 des Kreiseleggengetriebes 46 und der Anschlußzapfen 43 des Vorgelegegetriebes 35 annähernd auf gleicher Höhe angeordnet sind.

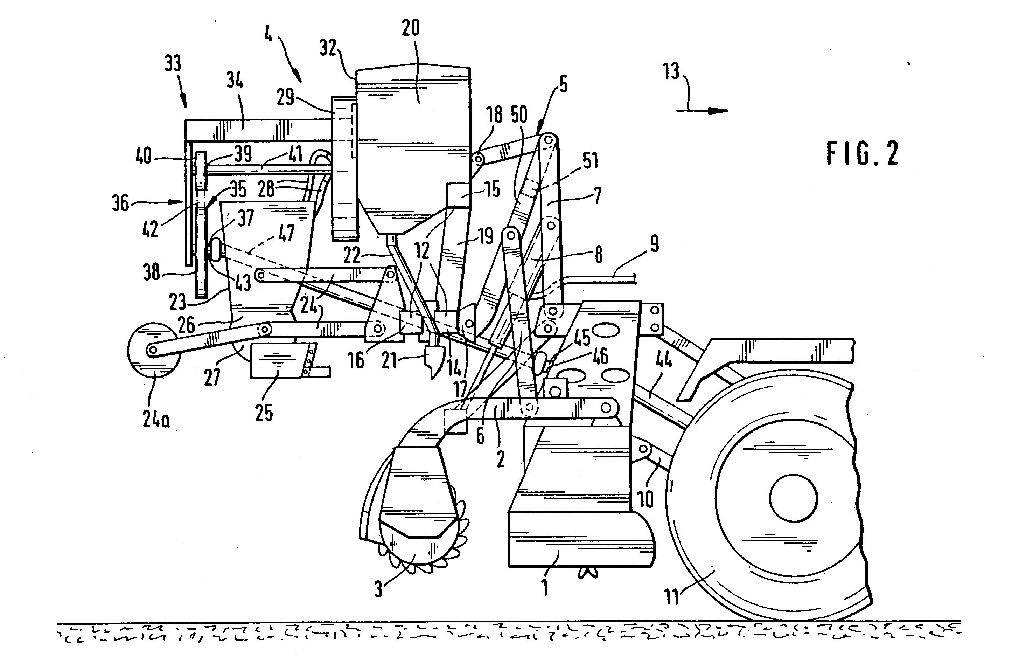

Beim Wendevorgang am Feldende wird die Gerätekombination in die in Fig. 2 dargestellte Position gebracht, die der Transportstellung entspricht. Dieses Überführen der Einzelkornsämaschine 4 in diese ganz nach vorne oben befindliche Transportstellung dient zur Verlagerung des sich weit hinter dem Schlepper 11 befindlichen Schwerpunktes der Gerätekombination in Richtung zum Schlepper 11 und bewirkt eine deutliche Reduzierung der erforderliche Hubkräfte beim Ausheben der Gerätekombination.

Die Funktions- und Arbeitsweise der Gerätekombination, bei der die Bestellmaschine 4 bei laufender Gelenkwelle 47 derart angehoben werden kann, so daß eine deutliche Schwerpunktverschiebung zum Schlepper erfolgt, läßt sich folgendermaßen beschreiben:

Aufgrund der entsprechenden Dimensionierung des Hydraulikzylinders 8 und des Anschlusses der Hydraulikleitung 9 an den Hydraulikkreislauf, an dem auch der Hydraulikzylinder des Dreipunktkrafthebers 10 des Schleppers 11 angeschlossen ist, wird beim Betätigen des Steuerventils des Dreipunktkrafthebers 10 zunächst die Einzelkornsämaschine 4 mit Hilfe des Hubrahmens 5 in nach vorn-oben weisender Transportstellung angehoben, bevor die gesamte Gerätekombination vom Dreipunktkraftheber 10 angehoben wird.

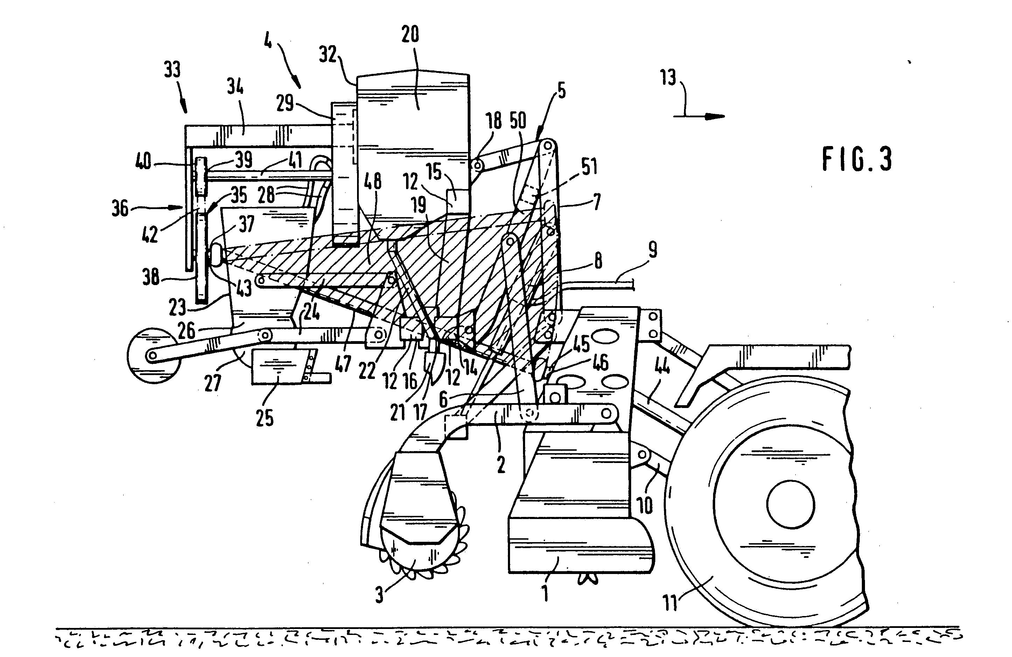

Die Fig. 3 zeigt den schraffierten Bereich, der den großen, freien Schwenkbereich 48 für das Durchschwenken der Gelenkwelle 47, beim Überführen der Bestellmaschine 4 von der Arbeitsstellung gemäß Fig. 1 in die Transport- oder Wendestellung gemäß Fig. 2, dargestellt. Der schraffiert dargestellte Schwenkbereich 48 zeigt die Extremabwinklungen der Gelenkwelle 47, wobei keine Abwinklung der Gelenkwelle 47 über die von den Gelenkwellenherstellern vorgegebenen Abwinklungen hinausgehen, so daß es beim Anheben der Einzelkornsämaschine 4 zu keiner Beschädigung der laufenden Gelenkwelle 47 kommt. Der Antrieb des Saugluftgebläses 29 ist ständig gewährleistet und sorgt für den zur Vereinzelung der Saatkörner erforderlichen Unterdruck, auch während des Wendevorganges bei ganz ausgehobener Bestellmaschine 4.

Das Anheben der Bestellmaschine 4 bei laufender Gelenkwelle 47 in der Weise, daß eine deutliche Schwerpunktverschiebung zum Schlepper 11 erfolgt, wird durch die Anordnung des Vorgelegegetriebes 35 mit dem Anschlußzapfen 43 für den Anschluß der Gelenkwelle 47 in dem hinteren Bereich 33 der Bestellmaschine 4 erreicht. Durch das extrem weit nach hinten Versetzen des Gelenkwellenanschlusses 43 erreicht man eine relativ lange Gelenkwelle 47 und dadurch kleine und flache Abwinklungen der Gelenkwelle 47 beim Ausheben der Bestellmaschine 4 gegenüber der Kreiselegge 1.

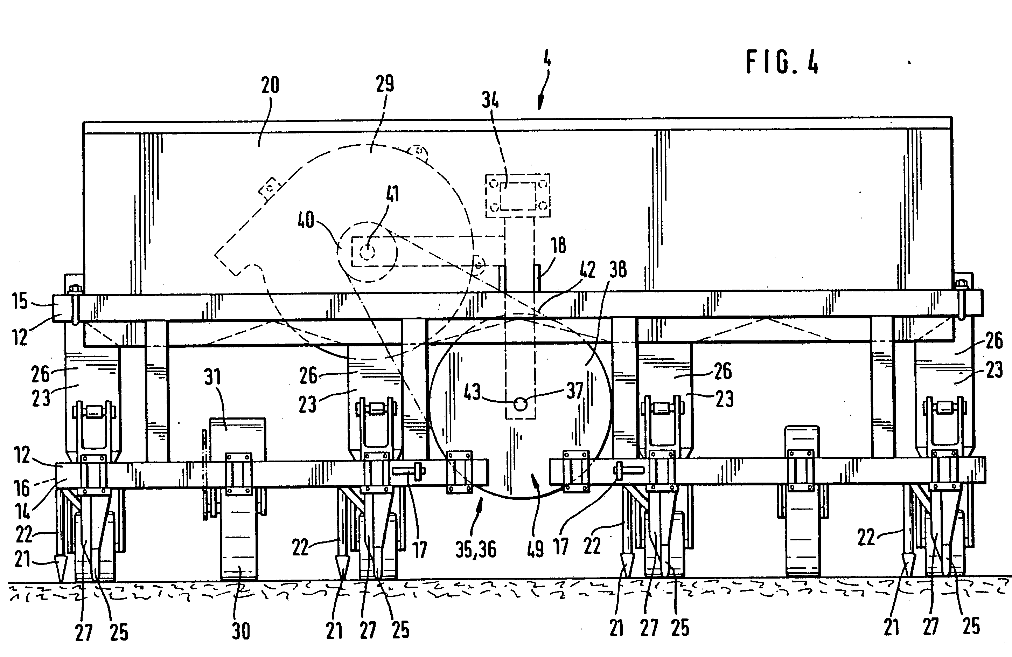

Da die das Vorgelegegetriebe 35 des Gebläses 29 antreibende Gelenkwelle 47 an den Zapfwellendurchtrieb 45 des Kreiseleggengetriebes 46 angeschlossen ist und sich dieser Zapfwellendurchtrieb 45 in einem Abstand a vor den Dreipunktkupplungselementen 17 des Hubrahmens 5 befindet, ist es erforderlich, daß der Tragrahmen 12 der Bestellmaschine 4 ebenfalls mit einem ausreichend großen, freien Schwenkbereich für das Durchschwenken der Gelenkwelle 47 ausgerüstet ist. Dieser große, freie Schwenkbereich für das Durchschwenken der Gelenkwelle 47 wird gemäß Fig. 4 dadurch erreicht, daß die Querträger 14 und 16 des Tragrahmens 12 in der Mitte geteilt sind. Der Anschlußzapfen 43 für den Anschluß der Gelenkwelle 47 befindet sich genau in der Maschinenmitte, seitlich versetzt zu der Gebläseantreibswelle 41 des Gebläses 29, so daß die Gelenkwelle 47 sich im mittleren Bereich der Bestellmaschine 4 frei auf- und abbewegen kann.

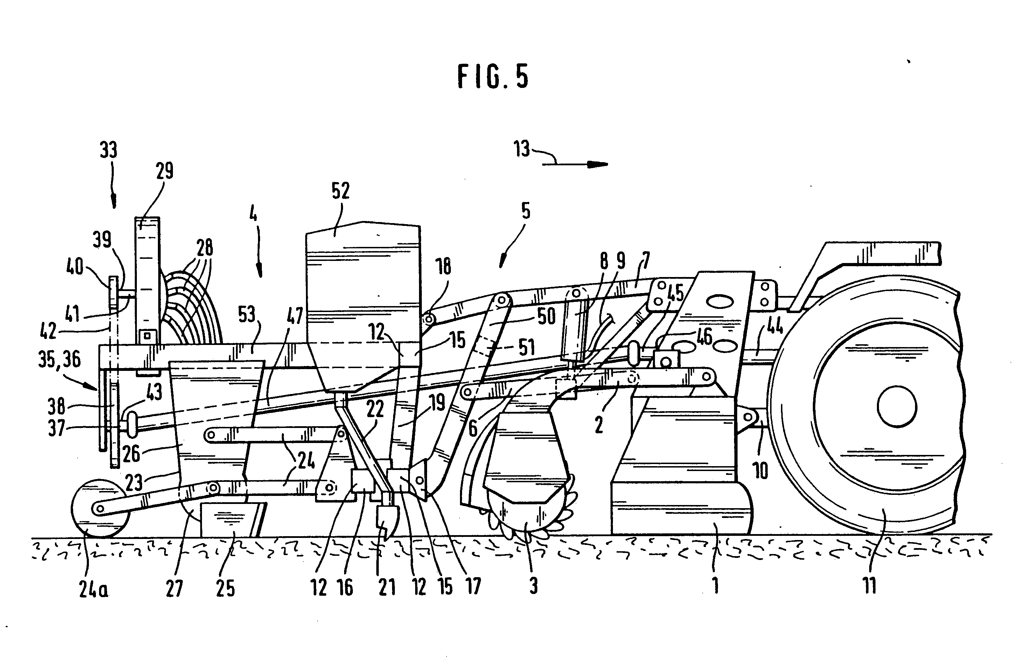

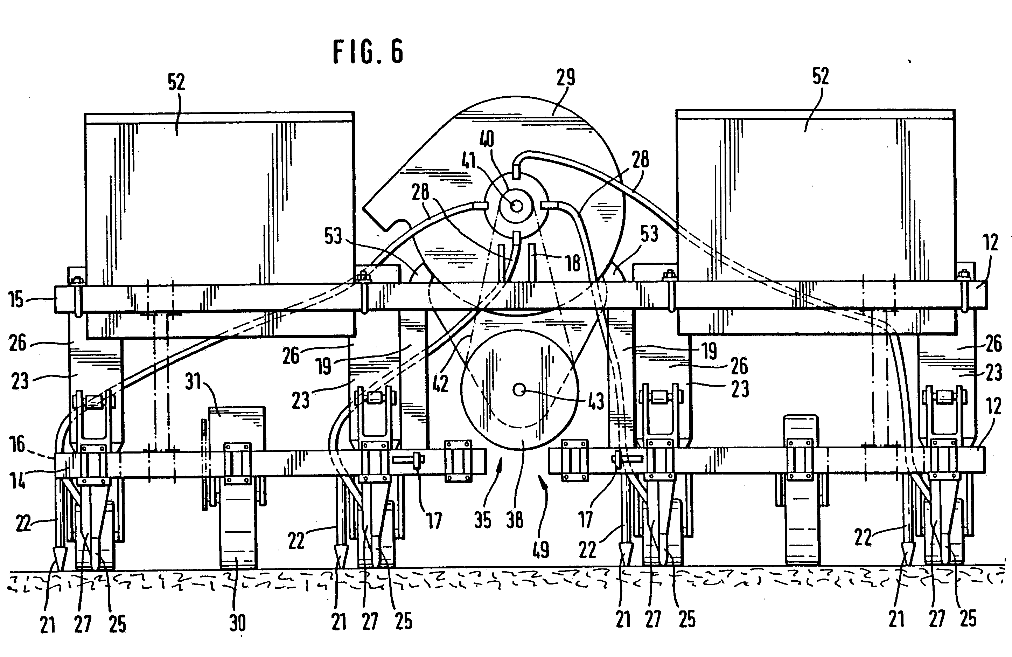

Die Fig. 5 zeigt ebenfalls eine Gerätekombination bestehend aus einer Kreiselegge 1 und der Einzelkornsämaschine 4 in Arbeitsstellung. Diese Einzelkornsämaschine 4 gemäß den Fig. 5 und 6 unterscheidet sich jedoch durch eine andere Bauanordnung des Gebläses 29 sowie durch einen zweiteiligen Vorratsbehälter 52 für Saatgut oder Düngemittel.

Das Gebläse 29 dieser Bestellmaschine 4 ist im hinteren Bereich 33 vor dem Vorgelegegetriebe 35 angeordnet. Das Gebläse 29 sowie das Vorgelegegetriebe 35 werden von einem Tragarm 53 gehalten und sind maschinenmittig dicht hintereinander angeordnet. Der Schwenkbereich 48 der Gelenkwelle 47 wird durch das maschinenmittig angeordnete Gebläse 29 nicht beeinträchtigt, da es ebenfalls im hinteren Bereich 33 angeordnet ist. Die Querträger 14 und 16 des Tragrahmens 12 sind in der Mitte für das Durchschwenken der Gelenkwelle geteilt, so daß die Bestellmaschine 4 einen ausreichend großen, freien Schwenkbereich 48 für das Durchschwenken der Gelenkwelle 47 aufweist und ein Anheben der Bestellmaschine 4 bei laufender Gelenkwelle 47 derart gewährleisten, so daß eine deutliche Schwerpunktverschiebung zum Schlepper 11 erfolgt, ohne daß es zu Beschädigungen an der das Gebläse 29 antreibenden Gelenkwelle 47 kommt.

**Patentansprüche**

1. Geschlossene Gerätekombination für die Landwirtschaft, bestehend aus einem an dem Dreipunktkraftheber (10) eines Schleppers angeordneten und mittels einer Antreibsgelenkwelle (44) an die Schlepperzapfwelle angeschlossenen Bodenbearbeitungsgerätes (1) und einer über als Hubrahmen (5) ausgebildete Kuplungsteile mit dem Bodenbearbeitungsgerät verbundenen Drillmaschine (4), die mit Hilfe des Hubrahmens gegenüber dem Bodenbearbeitungsgerät anhebbar ist, wobei die Drillmaschine wenigstens einen auf einem Tragrahmen (12, 24) angeordneten Vorratsbehälter (20, 26) für Saatgut bzw. Düngemittel und ein Gebläse (29) aufweist, und wobei die Drillmaschine von der Schlepperzapfwelle aus über eine zwischen der angetriebenen Abgangswelle des Bodenbearbeitungsgerätes (1) und der Drillmaschine (4) angeordneten Gelenkwelle (47) antreibbar ist, dadurch gekennzeichnet, daß das Gebläse (29) hinter dem Vorratsbehälter (20, 26) angeordnet ist, daß das Gebläse (29) über ein Vorgelegegetriebe (35) angetrieben wird, daß das Vorgelegegetriebe (35) mit einem Anschlußpunkt (43) für die Gelenkwelle (47) hinter dem Gebläse (29) angeordnet ist und daß die Gelenkwelle (47) den Tragrahmen (12, 14, 15, 19) durchsetzt und daß der Tragrahmen derart ausgebildet ist, daß die angetriebene Gelenkwelle (47) so weit beim Anheben der Drillmaschine schwenkbar ist, daß sich der Schwerpunkt der gesamten Gerätekombination zum Schlepper hin verlagert.

2. Gerätekombination nach Anspruch 1, dadurch gekennzeichnet, daß der Abstand (b) zwischen dem Anschlußpunkt (43) der Gelenkwelle (47) an der Bestellmaschine (4) und den Dreipunktanschlußpunkten der Bestellmaschine an dem Hubrahmen (5) zumindest halb so groß wie der Abstand (a) zwischen dem Anschlußpunkt (45) der Gelenkwelle (47) an dem Bodenbearbeitungsgerät (1) und den Dreipunktanschlußpunkten (17) des Hubrahmens (5) ist.

3. Gerätekombination nach Anspruch 1 oder 2, dadurch gekennzeichnet, daß der Tragrahmen (12) der Bestellmaschine (4) einen ausreichend großen freien Schwenkbereich (48) für das Durchschwenken der Gelenkwelle (47) über zumindest annähernd die Hälfte des gesamten Hubbereiches des Hubrahmens (5) besitzt.

4. Gerätekombination nach einem der Ansprüche 1 bis 3, dadurch gekennzeichnet, daß das Gebläse (29) an dem hinteren Bereich (33) unmittelbar vor dem Vorgelegegetriebe (35) angeordnet ist.

5. Gerätekombination nach wenigstens einem der Ansprüche 1 bis 4, dadurch gekennzeichnet, daß die Welle mit dem Anschlußzapfen (43) für die Gelenkwelle (47) seitlich versetzt zu der Welle (41) für den Gebläseantrieb angeordnet ist.

6. Gerätekombination nach wenigstens einem der Ansprüche 1 bis 5, dadurch gekennzeichnet, daß der Tragrahmen (12) und/bzw. die Scharhalteschienen in der Mitte für das Durchschwenken der Gelenkwelle (47) geteilt ist.

7. Gerätekombination nach wenigstens einem der Ansprüche 1 bis 6, dadurch gekennzeichnet, daß die Drillmaschine (4) eine pneumatische Sämaschine ist.

8. Gerätekombination nach wenigstens einem der Ansprüche 1 bis 6, dadurch gekennzeichnet, daß die Drillmaschine (4) eine Einzelkornsämaschine mit mehreren quer zur Fahrtrichtung (13) nebeneinander angeordneten Sägeräten (23) ist, die durch eine gemeinsame Antriebswelle angetrieben werden, und daß die Antriebswelle in dem Schwenkbereich (48) für die Gelenkwelle (47) geteilt ist.

9. Gerätekombination nach Anspruch 8, dadurch gekennzeichnet, daß die Antreibsverbindung für diese beiden geteilten Antriebswellen um den Schwenkbereich (48) der Gelenkwelle (47) herumgeführt ist.

10. Gerätekombination nach Anspruch 8, dadurch gekennzeichnet, daß für jeden Antriebswellenteil ein eigener Antrieb vorgesehen ist.

11. Gerätekombination nach wenigstens einem der vorangegangenen Ansprüche, dadurch gekennzeichnet, daß der Düngemittelbehälter (20) durchgehend ausgebildet und so breit ist, daß der Dünger über die Schwerkraft zu den Scharen (21) gelangt.

12. Gerätekombination nach Anspruch 1, dadurch gekennzeichnet, daß das Gebläse (29) unmittelbar hinter dem Düngerbehälter (20) angeordnet ist.

**Claims**

1. Compact combination of implements for agricultural purposes, including a ground cultivating implement (1), which is disposed on the three-point hydraulic lift (10) of a tractor and is connected to the power take-off shaft of the tractor by means of a drive shaft (44), and a drill (4) which is connected to the ground cultivating implement via the intermediary of coupling members — in the form of lifting frames (5) — and is raisable relative to the ground cultivating implement by means of the lifting frame, the drill including a fan (29) and at least one hopper (20, 26) for seed or fertiliser, which is disposed on a supporting frame (12, 24), and the drill being drivable by the power take-off shaft of the tractor via the intermediary of a universal-jointed shaft (47), which is disposed between the driven output shaft of the ground cultivating implement (1) and the drill (4), characterised in that the fan (29) is disposed behind the hopper (20, 26), the fan (29) is driven by a reduction gear (35), the reduction gear (35) is disposed behind the fan (29) and is provided with a connection point (43) for the universal-jointed shaft (47), the universal-jointed shaft (47) extends through the supporting frame (12, 14, 15, 19), and the supporting frame is such that the driven universal-jointed shaft (47) is pivotable to such an extent, when the drill is raised, that the centre of gravity of the entire combination of implements is displaced towards the tractor.

2. Combination of implements according to claim 1, characterised in that the spacing (b) between the point (43) where the universal-jointed shaft (47) is connected to the material delivery machine (4) and the three-point connection points where the material delivery machine is connected to the lifting frame (5) is at least half as long as the spacing (a) between the point (45) where the universal-jointed shaft (47) is connected to the ground cultivating implement (1) and the three-point connection points (17) of the lifting frame (5).

3. Combination of implements according to claim 1 or 2, characterised in that the supporting frame (12) of the material delivery machine (4) has a sufficiently large free pivotal region (48) for the full pivotal movement of the universal-jointed shaft (47) over at least approximately half the entire lifting range of the lifting frame (5).

4. Combination of implements according to one of claims 1 to 3, characterised in that the fan (29) is disposed at the rear region (33) directly in front of the reduction gear (35).

5. Combination of implements according to at least one of claims 1 to 4, characterised in that the shaft, with the connecting pin (43) for the universal-jointed shaft (47), is disposed in a laterally offset manner relative to the shaft (41) for driving the fan.

6. Combination of implements according to at least one of claims 1 to 5, characterised in that the supporting frame (12) and/or the coulter retaining rails are divided down the middle for the full pivotal movement of the universal-jointed shaft (47).

7. Combination of implements according to at least one of claims 1 to 6, characterised in that the drill (4) is a pneumatic seed drill.

8. Combination of implements according to at least one of claims 1 to 6, characterised in that the drill (4) is a single grain dispensing seed drill having a plurality of sowing implements (23), which are disposed adjacent one another transversely relative to the direction of travel (13) and are driven by a common drive shaft, and the drive shaft is divided in the pivotal region (48) for the universal-jointed shaft (47).

9. Combination of implements according to claim 8, characterised in that the driving connection for these two divided drive shafts extends around the pivotal region (48) of the universal-jointed shaft (47).

10. Combination of implements according to claim 8, characterised in that each drive shaft component is provided with its own driving means.

11. Combination of implements according to at least one of the preceding claims, characterised in that the fertiliser hopper (20) extends over the full width and is so wide that the fertiliser passes to the coulters (21) through gravity.

12. Combination of implements according to claim 1, characterised in that the fan (29) is disposed directly behind the fertiliser hopper (20).

**Revendications**

1. Combinaison d'outils, fermée, pour l'agriculture, combinaison formée d'une machine pour le travail du sol (1), reliée au dispositif de relevage en trois points (10) d'un tracteur et raccordée à la prise de force du tracteur par un arbre à cardans d'entraînement (44) ainsi qu'un semoir (4) relié par des pièces de liaison en forme de châssis de relevage (5) à la machine pour le travail du sol, ce semoir pouvant être relevé par rapport à la machine pour le travail du sol par l'intermédiaire du châssis de relevage, le semoir comportant au moins une trémie (20, 26), monté sur un châssis (12, 24), pour la semence ou l'engrais et une machine aspirante (29) le semoir étant entraîné à partir de la prise de force du tracteur par un arbre à cardans (47) monté entre l'arbre de sortie moteur de la machine pour le travail du sol (1) et le semoir (4), combinaison caractérisée en ce que la machine aspirante (29) est montée derrière la trémie (20, 26), cette machine (29) étant entraînée à partir d'une transmission intermédiaire (35), cette dernière étant montée derrière la machine aspirante (29) avec un élément d'axe de raccordement (43) pour l'arbre à cardans (47) et en ce que l'arbre à cardans (47) traverse le châssis (12, 14, 15, 19) et le châssis est réalisé de façon que l'arbre à cardans (47), entraîné, puisse basculer lors du relevage du semoir pour déplacer le centre de gravité de l'ensemble de la combinaison d'outils par rapport au tracteur.

2. Combinaison d'outils selon la revendication 1, caractérisée en ce que la distance (b) entre l'élément de raccordement (43) de l'arbre à cardans (47) et le semoir (4) ainsi que les points de raccordement de l'attelage en trois points du semoir sur le châssis de relevage (5) est au moins moitié aussi grand que la distance (a) entre l'élément d'axe de raccordement (45) de l'arbre à cardans (47) à la machine pour le travail du sol (1) et les points de raccordement de l'attelage en trois points (17) du châssis de relevage (5).

3. Combinaison d'outils selon les revendications 1 ou 2, caractérisée en ce que le châssis (12) du semoir (4) présente une plage de basculement libre (48) suffisamment grande pour le passage de l'arbre articulé (47) sur pratiquement la moitié de l'ensemble de la plage de relevage du châssis de relevage (5).

4. Combinaison d'outils selon l'une des revendications 1 à 3, caractérisée en ce que la machine aspirante (29) est prévue dans la zone arrière (33) directement devant la transmission intermédiaire (35).

5. Combinaison d'outils selon au moins l'une des revendications 1 à 4, caractérisée en ce que l'arbre et l'élément d'axe de raccordement (43) pour l'arbre articulé (47) sont décalés latéralement par rapport à l'arbre (41) de l'entraînement de la machine aspirante.

6. Combinaison d'outils selon au moins l'une des revendications 1 à 5, caractérisée en ce que le châssis (12) et/ou les rails de support des socs sont subdivisés en leur milieu pour le passage de l'arbre à cardans (47).

7. Combinaison d'outils selon au moins l'une des revendications 1 à 6, caractérisée en ce que le semoir (4) est un semoir pneumatique.

8. Combinaison d'outils selon au moins l'une des revendications 1 à 6, caractérisée en ce que le semoir (4) est un semoir de précision comportant plusieurs dispositifs de semoir (23) juxtaposés transversalement par rapport à la direction de déplacement (13), dispositifs qui sont entraînés à partir d'un arbre d'entraînement commun et en ce que cet arbre est divisé dans la plage de basculement (48) de l'arbre à cardans (47).

9. Combinaison d'outils selon la revendication 8, caractérisée en ce que la liaison d'entraînement des deux arbres d'entraînement divisés passe autour de la plage de basculement (48) de l'arbre à cardans (47).

10. Combinaison d'outils selon la revendication 8, caractérisée en ce que pour chaque partie d'arbre d'entraînement, il est prévu un entraînement distinct.

11. Combinaison d'outils selon au moins l'une des revendications précédentes, caractérisée en ce que la trémie d'engrais (20) est de forme continue et sa largeur est telle que l'engrais arrive aux socs (21) par l'effet du poids.

12. Combinaison d'outils selon la revendication 1, caractérisée en ce que la machine aspirante (29) est prévue directement derrière la trémie d'engrais (20).

FIG. 1

EP 0 201 048 B1

FIG. 2

FIG.3

FIG. 4

EP 0 201 048 B1

FIG.5

# FIG. 6

EP 0 201 048 B1